# EUROPÄISCHE PATENTANMELDUNG

(11) **EP 1 395 011 A1**
(43) Veröffentlichungstag der Anmeldung: **03.03.2004**
(21) Anmeldenummer: 02019307.4
(22) Anmeldetag: 28.08.2002
(51) Int. Cl.: H04L 27/26, H01Q 1/24, H04L 5/06

(54) **Anordnung zur Bildung eines digitalen Basisstations-Sendesignals**

(71) Anmelder: SIEMENS AKTIENGESELLSCHAFT, 80333 München (DE)
(72) Erfinder: Hassler, Bernd, Dr., 89171 Illerkirchberg (DE); Jelonnek, Björn, Dr., 89079 Ulm (DE); Korte, Werner, 81479 München (DE); Rheinfelder, Clemens, Dr., 89134 Blaustein (DE); Splett, Armin, Dr., 89081 Ulm (DE)

(57) **Zusammenfassung**

Die Erfindung betrifft eine Anordnung für eine Funkübertragung mit einer Basisstation zur Bildung eines digitalen Basisstations-Sendesignals, mit einer Mehrfachträger-Sende-Empfangseinrichtung zur Bildung von trägerfrequenten Antennensendesignalen aus dem Basisstation-Sendesignal und mit einer mindestens eine Einzelantenne aufweisenden Antennenanordnung zur Abstrahlung von Trägerfrequenzsignalen. Dabei ist jeder Einzelantenne jeweils eine Mehrfachträger-Sende-Empfangseinrichtung antennennah vorgeschaltet. Die Basisstation ist zur Übertragung des Basisstations-Sendesignals über mindestens eine verlustarme Zuleitung mit jeder Mehrfachträger-Sende-Empfangseinrichtung verbunden und jede Mehrfachträger-Sende-Empfangseinrichtung beinhaltet eine Transceivereinheit, mit deren Hilfe das Basisstations-Sendesignal in ein breitbandiges trägerfrequentes Antennensendesignal umgesetzt wird. Die Transceivereinheit weist eine Clipping-Einrichtung zur Amplitudenbegrenzung des trägerfrequenten Antennensendesignals auf.

## Beschreibung

Die Erfindung betrifft eine Anordnung für eine Funkübertragung gemäß dem Oberbegriff des Anspruchs 1.

Bei zellular aufgebauten Funkkommunikationsnetzen, bzw. Mobilfunknetzen, werden zur Funkübertragung innerhalb einer Funkzelle Basisstationen verwendet, die eine hohe Teilnehmerkapazität und eine große Funkübertragungsreichweite aufweisen sollen. Weiterhin wird für die Basisstation eine hohe Betriebszuverlässigkeit gefordert, wobei technische Ausfälle mit einem möglichst geringen Aufwand behebbar sein sollen.

Hohe Funkübertragungsreichweiten werden bei einer Übertragung von der Basisstation zum Teilnehmer (Downlink) einerseits mit Hilfe von hohen ausgangsseitigen Sendeleistungen an der Basisstation und andererseits durch Formung eines speziellen Antennenstrahlungsdiagramms einer Sendeantennenanordnung der Basisstation erreicht.

Vom Teilnehmer zur Basisstation (Uplink) hingegen werden hohe Funkübertragungsreichweiten einerseits dadurch erzielt, dass empfangsseitige Komponenten der Basisstation lediglich eine geringe Rauschzahl aufweisen, um leistungsschwache Empfangssignale nicht zusätzlich zu verschlechtern, und andererseits durch Formung eines speziellen Empfangsantennen-Strahlungsdiagramms, wodurch unter Ausnutzung des Antennengewinns der Empfang und damit die Funkübertragungsreichweite verbessert werden. Als empfangsseitige Komponenten geringer Rauschzahl werden beispielsweise rauscharme Empfangsverstärker verwendet.

Die ausgangsseitigen Sendeleistungen von Signalen der Basisstation sind zusätzlich derart zu wählen, dass die durch Zuleitungen zwischen der Basisstation und der Sendeantenne verursachten Verluste entsprechend ausgeglichen werden. Aus diesem Grund hat ein in der Basisstation angeordneter Sendeverstärker, der zur Verstärkung von trägerfrequenten Antennensignalen dient, eine entsprechende Leistungsreserve vorzuhalten. Analog dazu steigt dessen Verlustleistung an, die in Wärme umgesetzt wird, weshalb aufwändige Kühlvorrichtungen zur Wärmeabfuhr vorzusehen sind.

Verbesserungen der Teilnehmerkapazität und der Funkübertragungsreichweite werden mit Hilfe von empfangsseitig und/oder sendeseitig vorgesehenen Smart-Antennensystemen erzielt. Durch teilnehmerspezifisch ausgebildete Strahlungsdiagramme werden hohe Antennengewinne realisiert, jedoch ist die Ansteuerung der Smart-Antennensysteme durch entsprechende Teilnehmersignale sowie eine auf den jeweiligen Teilnehmer bezogenen Nachführung der Strahlungsdiagramme nur sehr aufwändig zu realisieren.

Unter einer Vielzahl von Anordnungen und Verfahren zur Verbesserung einer Empfangs- bzw. einer Sendesituation werden nachfolgend stellvertretend einige genannt.

Aus EP 0945998 A ist ein Empfänger für Hochfrequenzsignale mit zwei oder mehr Empfangspfaden bekannt, wobei den Empfangspfaden zugeordnete Ausgangssignale einem auswertenden Detektor zugeführt werden. Mit Hilfe eines derartigen Empfängers werden Störmechanismen (Spiegelfrequenzen, usw.) unterdrückt und eine erhöhte empfangsseitige Störfestigkeit erzielt.

Aus EP 0969638 A ist ein Verfahren zur Linearisierung von multiträgerfähigen Funkempfängern bekannt. Mit Hilfe des dort beschriebenen Funkempfängers werden durch Nichtlinearitäten eines Analog/Digital-Wandlers entstehende Intermodulationskomponenten durch eine Vorverzerrung eines empfangenen Eingangssignals hinsichtlich Amplitude und Phase kompensiert.

Aus WO 01/26234 ist ein Sigma-Delta-Modulator zur Wandlung zeitdiskreter Abtastwerte in Analogsignale bekannt. Mit dessen Hilfe wird Quantisierungsrauschen unter Verwendung kostengünstiger und leistungssparender Technologie reduziert.

Aus WO 02/01724 ist ein Digital/Analog-Wandler für Mobilfunkbasisstationen bekannt, der aus digitalen Daten mit hoher Bitrate ein analoges und als hochfrequentes Sendesignal verwendbares Ausgangssignal erzeugt. Dabei weist das Ausgangssignal eine hohe spektrale Reinheit auf.

Aus EP 1227594 A ist ein Sigma-Delta-Modulator zur Digitalisierung von analogen Hochfrequenzsignalen bekannt. Mit Hilfe eines derartigen Analog/Digital-Wandlers sind hohe Signal-Rauschverhältnisse realisierbar.

Aus EP 1227593 A ist ein Sigma-Delta-D/A-Wandler bekannt, dessen interner Rückkoppelzweig ein Übertragungssystem mit einer negativen Gruppenlaufzeit aufweist. Mit dessen Hilfe ist es möglich, die Genauigkeit des Sigma-Delta-D/A-Wandlers zu erhöhen und bei einer technisch einfachen Realisierung eine breitbandige Signalnachbildung zu verwirklichen.

In der deutschen Patentanmeldung mit dem Aktenzeichen DE 10162566.9 vom 19.12.2001 wird ein Sigma-Delta-Wandler zur Wandlung eines digitalen Eingangssignals in ein analoges Ausgangssignal beschrieben. Mit Hilfe des Sigma-Delta-Wandlers wird bei geringem Überabtastfaktor ein hohes Signal-Rauschverhältnis erzielt.

In der deutschen Patentanmeldung mit dem Aktenzeichen DE 10162565.0 vom 19.12.2001 wird ein Sigma-Delta-Modulator zur Wandlung eines breitbandigen digitalen Eingangssignal in ein analoges Ausgangssignal beschrieben. Der Sigma-Delta-Wandler weist eine erhöhte Stabilität und eine höhere Nutzsignalbandbreite als bisher bekannte Sigma-Delta-Modulatoren auf.

In der deutschen Patentanmeldung mit dem Aktenzeichen DE 10211537.0 vom 15.03.2001 wird eine Anordnung zur Reduzierung von nichtlinearen Verzerrungen bei einem Verstärkerstufen-Ausgangssignal einer Verstärkerstufe beschrieben. Mit Hilfe dieser Anordnung wird der Wirkungsgrad einer nach dem Feed-Forward-Prinzip ausgebildeten Verstärkerstufe verbessert.

In der deutschen Patentanmeldung mit dem Aktenzeichen DE 10219318.5 vom 30.04.2002 wird ein Verfahren zur Bildung eines trägerfrequenten Ausgangssignals aus n Teilsignalen eines Basisfrequenzbandes beschrieben. Bei diesem Verfahren, das auch als Smart-Clipping-Verfahren bezeichnet wird, werden n Teilsignale eines Basisfrequenzbandes unter gegenseitiger Berücksichtigung derart in ihren Amplitudenwerten begrenzt, dass sie als trägerfrequentes Ausgangssignal einem Verstärker mit geringen Leistungsreserven zuführbar sind. Mit Hilfe dieses Smart-Clipping-Verfahrens werden sowohl Amplitudenüberhöhungen beim Basisband-Teilsignal als auch Störungen beim trägerfrequenten Ausgangssignal verringert. Bei einem gleichbleibenden "error-vector-magnitude"-Wert wird eine Verringerung des "peak-to-average-ratio"-Werts beim Teilsignal erzielt.

In der Druckschrift "Solutions for Highly Integrated Future Generation Software Radio Basestation Transceivers", A. Splett et al, "Proceedings IEEE Custom Integrated Circuits Conference CICC", Mai 2001, San Diego, Seiten 24-1-1 bis 24-1-8, sind Strukturen sogenannter Transceiver beschrieben. Beispielsweise ist ein "Dual IF Conversion Broadband Transceiver" näher erläutert. Mit dessen Hilfe wird ein digitales Sendesignal, das als Ausgangssignal eines "Digital Up-Converters" DUC vorliegt, digital-analog-gewandelt, gefiltert und breitbandig in einen Trägerfrequenzbereich umgesetzt. Breitbandige trägerfrequente Empfangssignale werden entsprechend in einen Zwischenfrequenzbereich umgesetzt, verstärkt, gefiltert und analog-digital-gewandelt.

Es ist Aufgabe der vorliegenden Erfindung, eine Anordnung für eine Funkübertragung mit einer hohen Teilnehmerkapazität und mit einer hohen Funkübertragungsreichweite anzugeben.

Die Aufgabe der Erfindung wird durch die Merkmale des Anspruchs 1 gelöst. Vorteilhafte Weiterbildungen sind in den Unteransprüchen angegeben.

Durch die erfindungsgemäße antennennahe Anordnung der Mehrfachträger-Sende-Empfangseinrichtung und die Zuführung von digitalen Basisstations-Sendesignalen von der Basisstation zu den einzelnen Mehrfachträger-Sende-Empfangseinrichtungen werden beim entsprechenden linearen Leistungsverstärker, der zur Verstärkung von trägerfrequenten Antennensendesignalen dient, vorzuhaltende Leistungsreserven reduziert, da Verluste in den Zuleitungen vermindert werden.

Erfindungsgemäß sind die Zuleitungen besonders bevorzugt als Lichtwellenleiter bzw. als Glasfaserkabel ausgeführt.

Durch die erfindungsgemäße Verwendung einer Transceiverunit, die beispielsweise als oben beschriebener "Dual IF Conversion Broadband Transceiver" ausgebildet ist, werden sowohl Sende- als auch Empfangssignale breitbandig und effektiv umgesetzt.

Erfindungsgemäß beinhaltet die Transceiverunit eine Clipping-Einrichtung, wie sie beispielsweise in der europäischen Patentanmeldung mit dem Aktenzeichen EP 02009775.4 vom 30.04.2002 beschrieben ist. Durch die dort beschriebene Amplitudenbegrenzung werden sendeseitig beim linearen Verstärker wiederum vorzuhaltende Leistungsreserven eingespart.

Durch die erfindungsgemäße Verwendung von Sigma-Delta-Wandlern bei den einzelnen Mehrfachträger-Sende-Empfangseinrichtungen wird sendeseitig ein digitales Basisstations-Sendesignal in ein trägerfrequentes Antennensendesignal unter gleichzeitiger Verringerung des "peak-to-average"-Werts umgesetzt, während empfangsseitig eine Verbesserung des Signal-Rauschverhältnisses erreicht wird.

Durch die Reduzierung von sendeseitig vorzuhaltenden Leistungsreserven beim linearen Verstärker wird eine Verringerung der Verlustleistung im Verstärker erreicht. Damit wird eine ausschließliche passive Kühlung des linearen Verstärkers, die mit geringem Aufwand realisierbar ist, ermöglicht. Ein Risiko einer zeitaufwändigen und kostenintensiven Verstärker-Reparatur kann dabei als vernachlässigbar gering betrachtet werden, da der lineare Leistungsverstärker durch die ausreichende passive Kühlung eine hohe Lebenserwartung aufweist.

Eine Verringerung der Verlustleistung im sendeseitigen Verstärker wird dadurch erzielt, dass seine Verstärkungskennlinie durch eine auch als "Predistortion" bezeichnete Vorverzerrung linearisiert wird.

Bei der erfindungsgemäßen Anordnung werden Smart-Antennen als Sende- bzw. Empfangsantennen verwendet, wodurch eine Erhöhung der Teilnehmerkapazität erzielt wird. Diese Smart-Antennen werden entweder mit Hilfe eines Koppelnetzwerkes angespeist, das beispielsweise als Butler-Matrix ausgebildet ist, oder die entsprechenden Antennensignale werden sende- bzw. empfangsseitig zur Bildung der Strahlungsdiagramme vorgeformt bzw. gewichtet.

Ein weiterer Vorteil bei der Verwendung von Smart-Antennen ist darin zu sehen, dass mit relativ niedrigen Signalleistungen aufgrund des durch Strahlungsdiagrammformung erzielbaren hohen Antennengewinns große Funkübertragungsreichweiten erzielt werden. Auch dadurch wird beim linearen Verstärker eine Verringerung der Verlustleistung erreicht.

Bei Verwendung von Lichtwellenleitern als Zuleitungen zwischen Basisstation und Mehrfachträger-Sende-Empfangseinrichtung wird jeweils eine optische Sende-Empfangseinheit der jeweiligen Mehrfachträger-Sende-Empfangseinrichtung vorgeschaltet. Dabei kann sowohl sende- als auch empfangsseitig jeweils ein Glasfaserkabel für Sende- bzw. Empfangsweg verwendet werden, auf dem dann mit Hilfe eines Multiplexverfahrens die Basisstations-Signale optisch übertragen werden. Alternativ dazu wird eine Vielzahl von Lichtwellenleitern pro Mehrfachträger-Sende-Empfangseinrichtung verwendet.

Durch die erfindungsgemäße antennennahe Anordnung der Mehrfachträger-Sende-Empfangseinrichtungen wird eine geringe Antennenrauschzahl erzielt und damit der Empfang bzw. die Funkübertragungsreichweite verbessert.

Bei den Zuleitungen sind durch die antennennah erfolgende Frequenzumsetzung in den bzw. aus dem Trägerfrequenzbereich lediglich geringe Übertragungsbandbreiten zu berücksichtigen.

Im Folgenden wird ein Ausführungsbeispiel der vorliegenden Erfindung anhand der Zeichnungen näher erläutert. Dabei zeigt:
- FIG 1: eine Anordnung für eine Funkübertragung gemäß der vorliegenden Erfindung, und
- FIG 2: ein Blockschaltbild einer in FIG1 dargestellten Mehrfachträger-Sende-Empfangseinrichtung.

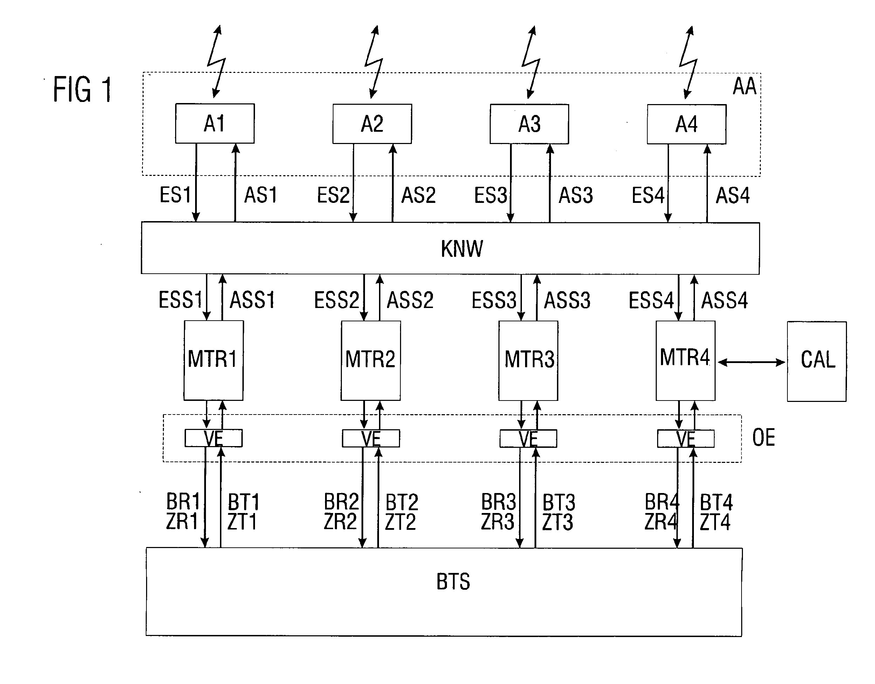

FIG 1 zeigt eine Anordnung für eine Funkübertragung gemäß der vorliegenden Erfindung.

Eine Antennenanordnung AA weist mindestens eine Einzelantenne A1, A2, A3, A4 auf. Dabei ist jeder Einzelantenne A1 bis A4 jeweils eine Mehrfachträger-Sende-Empfangseinrichtung MTR1, MTR2, MTR3, MTR4 antennennah vorgeschaltet.

Zur Übertragung eines digitalen Basisstations-Sendesignals BT1 bis BT4 eines Basisfrequenzbandes von einer Basisstation BTS zur entsprechend zugeordneten Mehrfachträger-Sende-Empfangseinrichtung MTR1 bis MTR4 bzw. von Basisstations-Empfangssignalen BR1 bis BR4 in umgekehrter Richtung sind die Mehrfachträger-Sende-Empfangseinrichtungen MTR1 bis MTR4 sendeseitig über Zuleitungen ZT1 bis ZT4 und empfangsseitig über Zuleitungen ZR1 bis ZR4 mit der Basisstation BTS verbunden.

Die Zuleitungen ZT1 bis ZT4 bzw. ZR1 bis ZR4 sind bevorzugt als Lichtwellenleiter ausgebildet. Zum Senden der Basisstations-Sendesignale BT1 bis BT4, bzw. zum Empfang der Basisstations-Empfangsignale BR1 bis BR4 über Lichtwellenleiter ist jeder einzelnen der Mehrfachträger-Sende-Empfangseinrichtung MTR1 bis MTR4 jeweils eine optische Sende-Empfangseinheit VE vorgeschaltet. Diese sind zu einer gemeinsamen Optoeinheit OE zusammenfassbar.

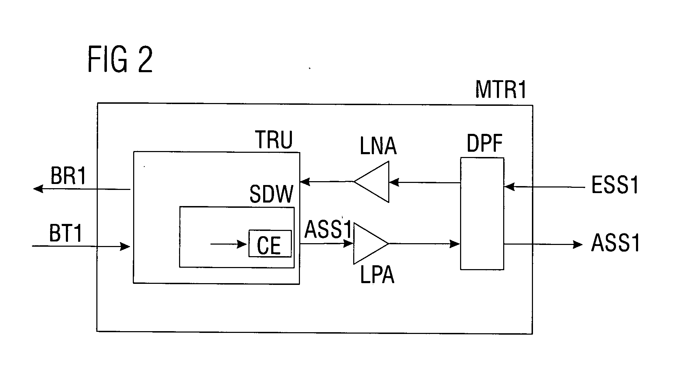

Jede einzelne der Mehrfachträger-Sende-Empfangseinrichtungen MTR1 bis MTR4 beinhaltet eine sogenannte Transceivereinheit TRU (siehe FIG 2), die beispielsweise der oben genannten Druckschrift "Solutions for Highly Integrated Future Generation Software Radio Basestation Transceivers" entnehmbar ist.

Mit Hilfe der Mehrfachträger-Sende-Empfansgeinrichtungen MTR1 bis MTR4 werden die digitalen Basisstations-Sendesignale BT1 bis BT4 jeweils in breitbandige, mehrere Trägerfrequenzen aufweisende Antennensendesignale ASS1 bis ASS4 umgesetzt. Entsprechend werden im Empfangsfall breitbandige trägerfrequente Antennenempfangssignale ESS1 bis ESS4 in die digitalen Basisstations-Empfangsignale BR1 bis BR4 des Basisfrequenzbandes umgesetzt.

Die trägerfrequenten Antennensendesignale ASS1 bis ASS4 gelangen anschließend als Trägerfrequenzsignale AS1 bis AS4 an mindestens eine Einzelantenne A1 bis A4 der Antennenanordnung AA. Zur Ansteuerung einer als adaptive Antennenanordnung ausgeprägten Antennenanordnung AA wird ein Koppelnetzwerk KNW verwendet, das beispielsweise als Butlermatrix ausgebildet ist. Die Zuordnung von sendeseitigen Trägerfrequenzsignalen AS1 bis AS4 bzw. von empfangsseitigen Trägerfrequenzsignalen ES1 bis ES4 zu den Einzelantennen A1 bis A4 bzw. zu den Mehrfachträger-Sende-Empfangseinrichtungen MTR1 bis MTR4 erfolgt mit Hilfe der Butler-Matrix.

Die Antennenanordnung AA kann jedoch auch ohne adaptive Ausprägung zur Funksektorversorgung ausgebildet werden, wobei eine erste Einzelantenne A1 einen ersten Funksektor versorgt, usw.

In einer bevorzugten Ausführung ist eine Kalibrationseinrichtung CAL antennennah angeordnet. Diese wird einerseits zur sendeseitigen Kalibration der Einzelantennen einer als Smart-Antenne ausgebildeten Antennenanordnung AA und andererseits zur Adaption der Vorverzerrung eines sendeseitigen Verstärkers genutzt.

FIG 2 zeigt ein Blockschaltbild einer in FIG1 dargestellten Mehrfachträger-Sende-Empfangseinrichtung MTR1.

Die Mehrfachträger-Sende-Empfangseinheit MTR1 beinhaltet einen linearen Leistungsverstärker LPA zur Verstärkung des trägerfrequenten Antennensignals ASS1. Dabei weist der Verstärker LPA eine Vorverzerrung (Predistortion) auf.

Die Mehrfachträger-Sende-Empfangseinheit MTR1 weist weiterhin eine Transceiverunit TRU mit einem Sigma-Delta-Wandler SDW auf. Mit Hilfe der Transceiverunit TRU wird das digitale Basisstations-Sendesignal BT1 direkt in einen Trägerfrequenzbereich umgesetzt. Besonders vorteilhaft wird zur Adaption der Vorverzerrung durch die Kalibrationseinrichtung CAL aus FIG1 genau ein Messempfänger für mehrere Mehrfachträger-Sende-Empfangseinrichtungen gemeinsam benutzt.

Die Transceivereinheit TRU weist ihrerseits eine Clippingeinrichtung CE auf, mit deren Hilfe ein breitbandiges trägerfrequentes Antennensendesignal ASS1 amplitudenbegrenzt erzeugt wird.

Ein Duplex-Filter DPF ist dabei einem empfangsseitigen rauscharmen Verstärker LNA vorgeschaltet, bzw. dem linearen Leistungsverstärker LPA sendeseitig nachgeschaltet.

## Patentansprüche

1. Anordnung für eine Funkübertragung mit einer Basisstation (BTS) zur Bildung eines digitalen Basisstations-Sendesignals (BT1,...,BT4), mit einer Mehrfachträger-Sende-Empfangseinrichtung (MTR1,...,MTR4) zur Bildung von trägerfrequenten Antennensendesignalen (ASS1,...,ASS4) aus dem Basisstations-Sendesignal (BT) und mit einer mindestens eine Einzelantenne (A1,...,A4) aufweisenden Antennenanordnung (AA) zur Abstrahlung von Trägerfrequenzsignalen (AS1,...,AS4), **dadurch gekennzeichnet,**
- **dass** jeder Einzelantenne (A1,...,A4) jeweils eine Mehrfachträger-Sende-Empfangseinrichtung (MTR1,...,MTR4) antennennah vorgeschaltet ist,
- **dass** die Basisstation (BTS) zur Übertragung des Basisstations-Sendesignals (BT1,...,BT4) über mindestens eine verlustarme Zuleitung (ZT1,...,ZT4) mit jeder Mehrfachträger-Sende-Empfangseinrichtung (MTR1,...,MTR4) verbunden ist,
- **dass** jede Mehrfachträger-Sende-Empfangseinheit (MTR1,...,MTR4) eine Transceivereinheit (TRU) beinhaltet, mit deren Hilfe das Basisstations-Sendesignal (BT) in ein trägerfrequentes breitbandiges Antennensendesignal (ASS1) umgesetzt wird, und
- **dass** die Transceivereinheit (TRU) eine Clipping-Einrichtung (CE) aufweist, mit deren Hilfe das trägerfrequente Antennensendesignal (ASS1) amplitudenbegrenzt erzeugt wird.

2. Anordnung nach Anspruch-1, **dadurch gekennzeichnet, dass** den Einzelantennen ein Koppelnetzwerk (KNW) derart vorgeschaltet ist, dass die Antennensendesignale (ASS1,...,ASS4) jeder Mehrfachträger-Sende-Empfangseinrichtung (MTR1,...,MTR4) als Trägerfrequenzsignale (AS1,...,AS4) an mindestens eine der n Einzelantennen (A1,...,A4) angeschaltet ist.

3. Anordnung nach Anspruch 2, **dadurch gekennzeichnet, dass** das Koppelnetzwerk (KNW) als Butler-Matrix ausgebildet ist.

4. Anordnung nach Anspruch 2 oder 3, **dadurch gekennzeichnet, dass** die trägerfrequenten Antennensendesignale (ASS1,...,ASS4) über das Koppelnetzwerk (KNW) derart an die Einzelantennen (A1,...,A4) angeschaltet sind, dass die Antennenanordnung (AA) als Smart-Antennenanordnung betrieben wird.

5. Anordnung nach Anspruch 2 oder 3, **dadurch gekennzeichnet, dass** die trägerfrequenten Antennensendesignale (ASS1,...,ASS4) über das Koppelnetzwerk (KNW) derart an die Einzelantennen (A1,...,A4) angeschaltet sind, dass die Antennenanordnung (AA) zur Funksektorversorgung verwendet wird.

6. Anordnung nach einem der vorhergehenden Ansprüche, **dadurch gekennzeichnet, dass** die Zuleitungen (ZT1,...,ZT4) zur optischen Übertragung des Basisstations-Sendesignals (BT) Lichtwellenleiter sind und jeder Mehrfachträger-Sende-Empfangseinrichtung (MTR1,...,MTR4) eine optische Sende-Empfangseinheit (VE) vorgeschaltet ist.

7. Anordnung nach einem der vorhergehenden Ansprüche, **dadurch gekennzeichnet, dass** jede Mehrfachträger-Sende-Empfangseinrichtung (MTR1,...,MTR4) sendeseitig einen Leistungsverstärker (LPA) mit Vorverzerrung zur Verstärkung des breitbandigen trägerfrequenten Antennensendesignals (ASS1) beinhaltet.

8. Anordnung nach Anspruch 7, **dadurch gekennzeichnet, dass** der sendeseitige Leistungsverstärker (LPA) ausschließlich passiv gekühlt ist.

9. Anordnung nach einem der vorhergehenden Ansprüche, **dadurch gekennzeichnet, dass** jede Mehrfachträger-Sende-Empfangseinrichtung (MTR1,...,MTR4) zur Bildung des trägerfrequenten Antennensendesignals (ASS1) einen Sigma-Delta-Wandler beinhaltet, mit dessen Hilfe das Basisstations-Sendesignal (BT1) sendeseitig direkt in das breitbandige trägerfrequente Antennensendesignal (ASS1) umgesetzt wird.

10. Anordnung nach einem der vorhergehenden Ansprüche, **dadurch gekennzeichnet, dass** mit Hilfe eines Vielfachzugriffsverfahrens mehrere Teilnehmersendedaten zum digitalen Basisstations-Sendesignal (BT1) zusammengefasst sind.

11. Anordnung nach einem der vorhergehenden Ansprüche, **dadurch gekennzeichnet, dass** eine Kalibrationseinrichtung antennennah angeordnet ist, die einerseits zur Kalibration der Einzelantennen und andererseits zur Adaption der Vorverzerrung des sendeseitigen Verstärkers verwendet wird.

12. Anordnung nach einem der vorhergehenden Ansprüche, **dadurch gekennzeichnet, dass** das digitale Basisstations-Sendesignal (BT1) breitbandig ist.
